(19) Europäisches Patentamt
European Patent Office
Office européen des brevets

(11) **EP 4 699 824 A1**

(12) **EUROPEAN PATENT APPLICATION**

(43) Date of publication:
**25.02.2026 Bulletin 2026/09**

(21) Application number: **24195541.8**

(22) Date of filing: **21.08.2024**

(51) International Patent Classification (IPC):
*B60C 23/04* *(2006.01)*

(52) Cooperative Patent Classification (CPC):
**B60C 23/0481**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bridgestone Europe NV/SA
1930 Zaventem (BE)**

(72) Inventors:
• **ALLEVA, Lorenzo
1930 ZAVENTEM (BE)**
• **BORTOLOTTO, Valerio
1930 ZAVENTEM (BE)**
• **POGGI, Marco
1930 ZAVENTEM (BE)**

(74) Representative: **Studio Torta S.p.A.
Via Viotti, 9
10121 Torino (IT)**

(54) **TIRE-MOUNTED SENSOR DETACHMENT DETECTION**

(57) The disclosure concerns a method for detecting detachment of a sensor mounted on an inner face or layer of a tire of a vehicle, comprising acquiring data related to at least one information item provided by said sensor, and detecting a detachment of the sensor based on the acquired data.

FIG. 7

EP 4 699 824 A1

**Description**

## TECHNICAL FIELD

The present disclosure relates, in general, to the automotive sector. More specifically, the present disclosure concerns a system and a related method for detecting detachment of a Tire-Mounted Sensor (TMS) from an inner face or layer of a tire.

## STATE OF THE ART

As is known, in the future of mobility, continuity and safety are key objectives for connected vehicles. In this scenario, tire usage monitoring with Internet of Things (IoT) devices can enable estimation of tire and vehicle status.
In particular, Tire-Mounted Sensors (TMSs) can provide information enabling assessing tire status.
In this context, even though tire issues due to TMS detachment are not proven, in the automotive/tire sector there is still a need for a technical solution for detecting whether a TMS is detached from the tire when the vehicle is running in order to avoid any impact on tire durability.
In particular, information from a TMS can be analyzed for informing the driver/owner/fleet manager/sensor owner of the TMS condition recommending proactive actions, e.g., a TMS check or TMS/tire replacement.
In this connection, EP 3 480 602 A1 discloses a method and apparatus for determining detachment of an acceleration sensor, wherein said method includes: acquiring, as acceleration information, a peak level which is a magnitude of a peak on a positive side or a negative side of an acceleration signal in a tire circumferential direction or a tire width direction detected by an acceleration sensor, or a peak interval which is a time interval between peaks, or acquiring the peak level or the peak interval of a differential acceleration signal in a tire radial direction obtained by differentiating the acceleration signal in the tire radial direction; calculating ratios of a difference between the acquired acceleration information and average values of the acceleration information to the average values; and determining that the acceleration sensor is detached from the inside of the tire when the calculated ratio exceeds a preset threshold value at multiple successive times instants.
Additionally, EP 2 501 566 B1 discloses a method for monitoring and detecting the detachment of a tire module from the inner face of a tire by carrying out the following steps: a) measuring the centrifugal acceleration having an effect on a tire module by means of an acceleration sensor arranged in the tire module; b) forwarding the measured acceleration values to an evaluation unit; c) analyzing the acceleration values upon acceleration of the vehicle in the starting phase or upon constant low speeds of the vehicle; d) activating a warning signal in the evaluation unit, insofar as the analysis of the acceleration values results in a statistically significant standard deviation in comparison to a tire module which is not detached from the inner face of the tire, thus detecting a freely tumbling tire module in the hollow space of the tire; e) outputting a warning signal to the vehicle owner which indicates the tire module which has detached from the inner face of the tire to the vehicle owner and gives the vehicle owner instruction to have the wheels of the vehicle inspected by a repair shop.

## OBJECT AND SUMMARY OF THE DISCLOSURE

In the light of what was previously explained, the Applicant has felt the need to develop an innovative technical solution for detecting whether a Tire-Mounted Sensor (TMS) is detached from an inner face or layer of a tire, thereby conceiving the present disclosure.
Thence, an object of the present disclosure is that of providing a system/device and a related methodology for efficiently detecting whether a TMS is detached from an inner face/layer of a tire, in particular from the inner liner thereof.
This and other objects are achieved by the present disclosure in that it relates to a method and a system for detecting detachment of a sensor mounted on an inner face or layer of a tire of a vehicle, as defined in the attached claims.

## BRIEF DESCRIPTION OF THE DRAWINGS

For a better understanding of the present disclosure, embodiments thereof will be described hereinafter, purely as non-limiting, non-binding examples, with reference to the enclosed drawings, wherein:

- Figures 1-5 show graphs related to a methodology for detecting detachment of a Tire-Mounted Sensor (TMS) according to an embodiment of the present disclosure;
- Figures 6 and 7 show graphs related to a methodology for detecting TMS detachment according to another embodiment of the present disclosure; and
- Figures 8 and 9 show flowcharts related to a methodology for detecting TMS detachment according to another embodiment of the present disclosure.

## DESCRIPTION OF EMBODIMENTS OF THE DISCLOSURE

Hereinafter the present disclosure will be described in detail with reference to the attached figures to allow a person skilled in the art to comprehend, make and use it. Various modifications to the described embodiments will be immediately apparent to those skilled in the art and the generic principles described hereinafter might be applied to other embodiments and applications without departing from the scope of protection of the present disclosure, as defined in the attached claims. Therefore, the present disclosure should not be considered limited to the described and illustrated embodiments, but it must be accorded the widest protective scope in accordance with the described and claimed characteristics.

The present disclosure concerns a method for detecting detachment of a sensor mounted on an inner face or layer of a tire of a vehicle, comprising:

- acquiring data related to at least one information item provided by said sensor; and
- detecting a detachment of the sensor based on the acquired data.

Preferably, detecting includes detecting whether:

- the sensor is within its cupholder with the latter being detached from the inner face/layer of the tire, or
- the sensor is outside the cupholder and completely free, or
- the sensor is within the cupholder with the latter being properly attached to the inner face/layer of the tire.

According to an embodiment of the present disclosure, in order to detect a detachment of a Tire-Mounted Sensor (TMS) from an inner face or layer (in particular, from the inner liner) of a tire, a specific information item provided by the TMS is exploited, namely the radial acceleration outside the footprint of the tire.

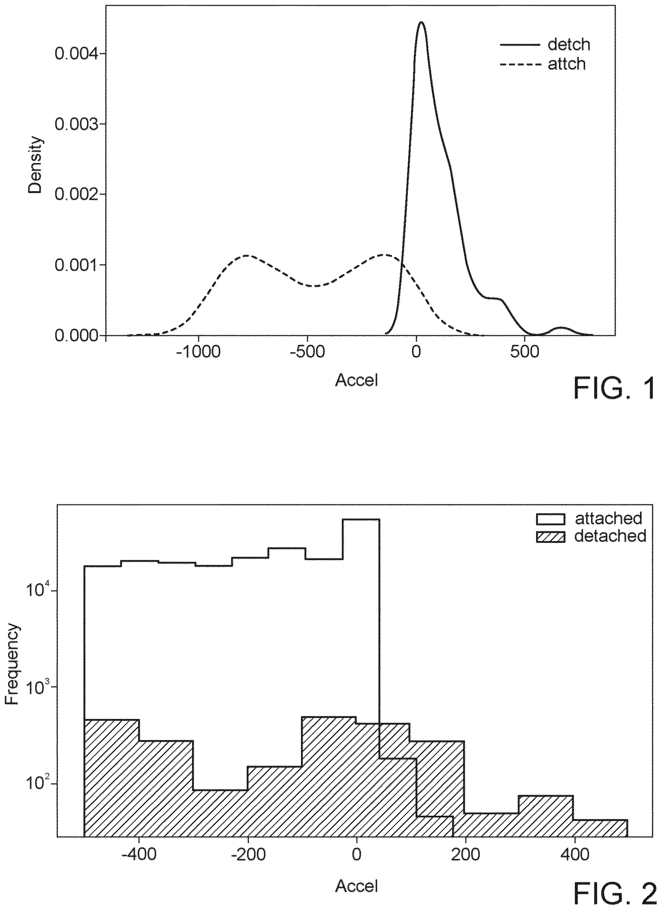

In this respect, reference can be made to Figure 1 that shows an example of radial acceleration distribution for an attached TMS (dotted line) and a detached TMS (solid line).

As shown in Figure 1, the radial acceleration outside the footprint of the tire has really different values if the TMS is attached or detached, if proper accelerations (e.g., negative radial accelerations) are considered.

In fact, from experimental tests performed by the Applicant it was observed that there is a strong difference in the radial acceleration outside the footprint, in particular when the acceleration sign is flipped (i.e., the radial acceleration changes sign from negative to positive).

In this connection, Figure 2 shows a comparison about the distribution of the positive radial acceleration for attached and detached TMSs. It is possible to observe how different the distributions are between the two cases. Thence, a threshold can allow detection with good accuracy whether the sensor is correctly attached.

Leveraging on the change in acceleration sign (flip), it is possible to construct a variable that estimates how much time a TMS spends "flipped" (with radial acceleration larger than a certain threshold - e.g., 200 in the example shown in Figure 2).

In pseudo-mathematical terms:

$$\text{Flip \%} = \left( \frac{number\ of\ counts\ with\ accel. > 200}{total\ number\ of\ counts} \right)$$

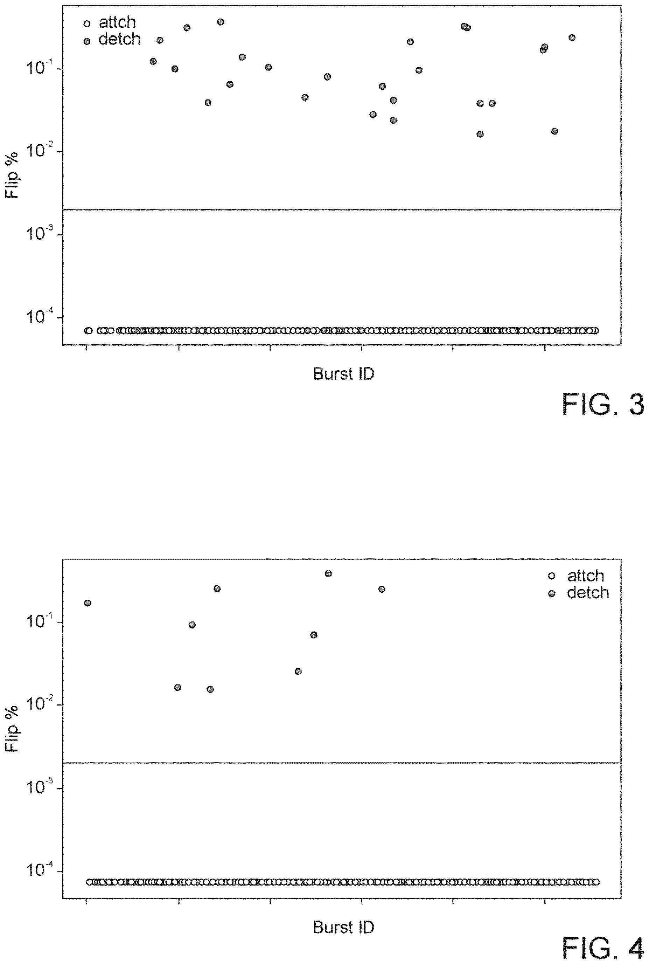

Figure 3 shows a first example of percentage of flip (Flip %) considering a single group of radial accelerations (one burst of data) taken in a short amount of time (or number of tire rotations). It is possible to observe that a linear selection on this quantity (e.g., 0.002 - represented by a horizontal grey line in the graph in Figure 3) allows to discriminate attached from detached TMSs.

Accuracy, efficiency and reliability in TMS detachment detection can be improved by considering multiple tire rotations to estimate the flip percentage (in fact, considering more tire rotations leads to greater sensitivity to anomalous behaviors).

The number of tire rotations is directly correlated with vehicle speed whereby the above TMS detachment detection method according to an embodiment of the present disclosure can be advantageously exploited with any vehicle speed. Anyway, said TMS detachment detection method may be used with higher vehicle speed (e.g., speed larger than 50 km/h).

The TMS detachment detection method according to an embodiment of the present disclosure does not use directly the number of rotations of the tire and, hence, it is independent of the vehicle usage, and it can be used also when the vehicle is accelerating/decelerating.

Compared to previous solutions (e.g., EP 2 501 566 B1), the TMS detachment detection method according to an embodiment of the present disclosure will perform well also for trucks performing long haul transports or regional transports with few stops and various accelerations/decelerations.

Figure 4 shows a second example of flip percentage considering two groups of nearby acceleration acquisitions (two bursts of data). It is possible to observe that the same linear selection used in the first example in Figure 3 (i.e., 0.002) is still valid for the second example in Figure 4 reducing drastically the number of false positives (i.e., detached TMSs that are not detected) while keeping to zero the false negatives (i.e., attached TMSs identified as detached).

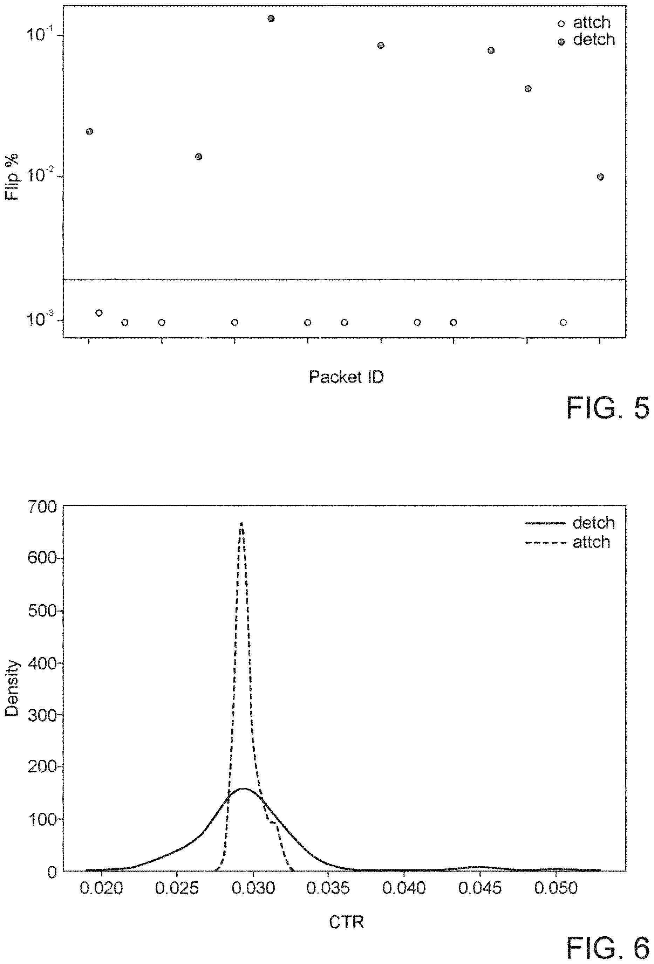

Figure 5 shows a third example of flip percentage considering accelerations acquired in one day of work (i.e., about 8 hours). From Figure 5 it is possible to observe that after one day of work, leveraging on the flip percentage as previously explained, it is possible to identify attached and detached TMSs with false positive and false negative rates equal to zero.

According to another embodiment of the present disclosure, another information item is advantageously exploited to detect detachment of a TMS, namely the standard deviation of the tire footprint length (wherein the latter is derived from, or computed based on, one or more related quantities directly provided by the TMS itself).

In particular, tire footprint length may be defined as the ratio between footprint contact time and tire revolution time (CTR).

In this respect, reference can be made to Figure 6 that shows an example of CTR distribution for an attached TMS (dotted line) and a detached TMS (solid line) . It is possible to observe that a non-fixed TMS is associated with a broader CTR distribution and hence with a larger distribution standard deviation.

The standard deviation per group of packages (e.g., group of CTR from tire revolutions near in time) can be calculated resulting in a strong feature enabling discrimination between attached and non-attached TMSs.

An example of logic exploitable to discriminate between attached and non-attached TMSs can be expressed, in pseudo-mathematical terms, as:

$$Attachment\ issue = \sigma(CTR) > T,$$

where $\sigma(\boldsymbol{CTR})$ denotes CTR standard deviation and $T$ denotes a predefined threshold (e.g., 0.01)

This logic has been tested over different types of TMS detachment to check whether it is possible also to identify the type of attachment issue.

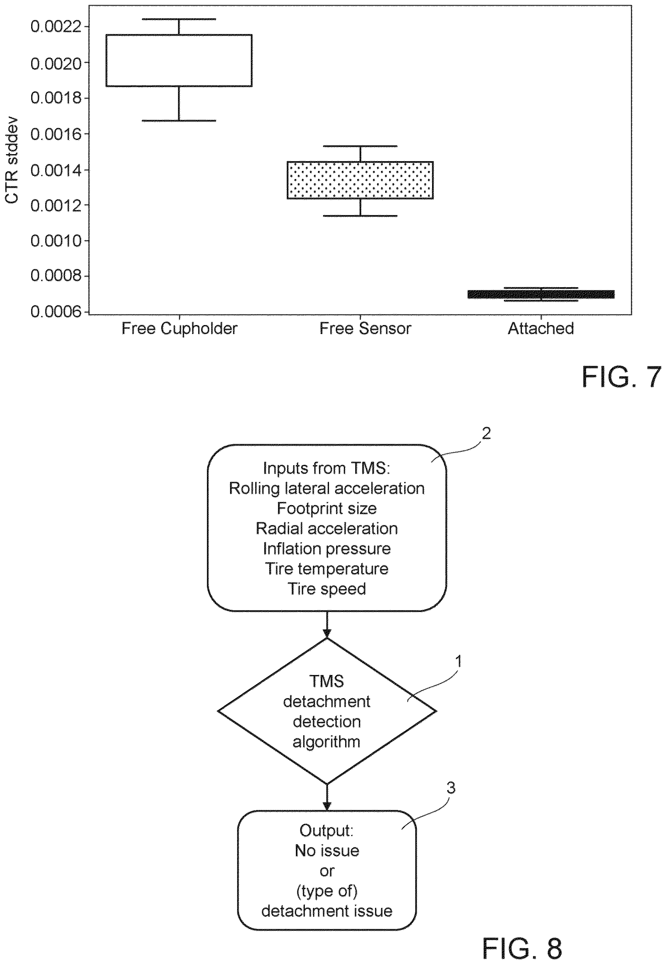

In this connection, reference can be made to Figure 7 that shows an example of distribution of CTR standard deviations for three different TMS statuses: TMS in the cupholder and cupholder detached (white rectangle), TMS outside the cupholder and free (dotted rectangle) and TMS properly attached (black rectangle). As shown in Figure 7, it is possible to select specific values of the CTR standard deviation to discriminate among said three different statuses (i.e., sensor in the cupholder and cupholder detached, sensor outside the cupholder and free, and sensor properly attached).

Standard deviation of the CTR has also an impact on load applied on each tire estimation. A comparison among loads from same axle tires could be done to check if one sensor is having attachment problem. If telematics information is available, it is also possible to compare the total vehicle load with the sum of all the single loads applied to each tire. In this way, it is possible to identify if a sensor is always providing a load value that brings the sum of the single tire loads far from the telematics total vehicle load.

Accuracy, efficiency and reliability in TMS detachment detection can be advantageously improved by using both the TMS detachment detection methods according to the embodiments of the present disclosure in synergistic combination.

Additionally, one or more technologies/solutions based on Machine Learning (ML) or Artificial Intelligence (AI) can be conveniently used to implement either or both the TMS detachment detection methods according to the embodiments of the present disclosure. In particular, instead of using simple detection thresholds, one or more ML/AI-based technologies/solutions can be properly trained, in a preliminary phase, based on:

- values of radial acceleration outside the footprint of the tire related to attached and detached TMSs; and/or
- values of CTR standard deviation related to TMSs that are in the cupholder with the latter detached, TMSs that are outside the cupholder and free, and TMSs that are properly attached.

Then, the trained ML/AI-based technology(ies)/solution(s) can be advantageously used to perform the detection in an in-operation phase.

According to another embodiment of the present disclosure, TMS detachment detection is performed based on one or more of the following information items provided, or derived/computed from/based on quantities provided, by the TMS itself (hereinafter called TMS information items):

- rolling lateral acceleration;
- footprint size;
- radial acceleration;
- inflation pressure;
- tire speed;
- tire temperature.

Additionally, in order to reduce TMS detachment detection time, one or more of the following additional vehicle telematics information items can be also considered for TMS detachment detection:

- load;
- speed;
- odometer.

Conveniently, in addition to the above information items, also one or more tire-wear-related quantities/measurements can be conveniently considered for TMS detachment detection.

Moreover, in case of semi-trucks, a further additional information that can be conveniently considered for TMS detachment detection is the tractor unit's load.

One or more analytical functions/algorithms can be conveniently created based on one or more of the information items/features/quantities previously mentioned to detect TMS detachment.

Preferably, a training phase of a selected TMS detachment detection algorithm/analytical function can be carried out based on different types of sensor problems to have a more general overview of the different cases (e.g., sensor removed from the cupholder vs sensor still in the cupholder but cupholder detached).

For example, a TMS detachment detection algorithm may create a support vector in one or multiple dimensions, where each dimension relates to a respective information item/feature/quantity (e.g., radial acceleration average outside the footprint, radial acceleration standard deviation outside the footprint, footprint length estimation error, etc.). The support vector splits the phase spaces into two or more regions. Two possible regions definitions can be "correctly attached" and "not correctly attached".

Once these regions are defined, an alert can be triggered if a TMS is observed for one or more days and/or a certain number of kilometers in a "not correctly attached" region.

The TMS detachment detection algorithm can use a simple threshold (in case of one dimension) or can be any complex classification algorithm such as Support Vector Machine, Logistic Regression, Random Forest, Neural Network, or a clustering algorithm.

Figure 8 shows a flowchart representing a TMS detachment detection algorithm (block 1) whose input is one or more of said TMS information items (block 2).

The output (block 3) of the TMS detachment detection algorithm (block 1) is an indication of whether or not there is a TMS detachment issue (and, conveniently, also the detachment issue type).

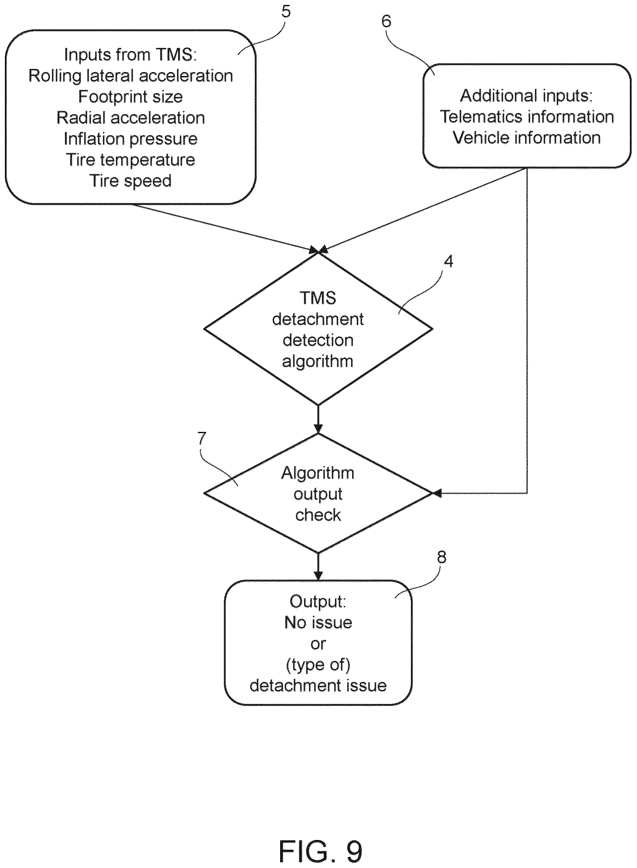

Figure 9 shows a flowchart representing a TMS detachment detection algorithm (block 4) whose input is one or more of said TMS information items (block 5), and also one or more telematics and/or vehicle information items (block 6). The output of the TMS detachment detection algorithm (block 4) is checked (block 7) based on telematics and/or vehicle information item(s) (block 6). The final output (block 8) is an indication of whether or not there is a TMS detachment issue (and, conveniently, also the detachment issue type).

The above TMS detachment detection logics can be expressed in pseudo-mathematical terms as

$$Detachment\ issue = F(TMS\ information),$$

namely the detection of a TMS detachment issue is a function of TMS information, or

$$Detachment\ issue = F(TMS\ information, Vehicle\ information, Telematics\ information),$$

namely the detection of a TMS detachment issue is a function of TMS, vehicle and telematics information.

In view of the foregoing, the present disclosure allows estimating whether a TMS is properly attached to a tire and informing the driver/owner/fleet manager/sensor owner about operating conditions of the TMS and the tire suggesting tire/sensor replacement when needed.

Notifications can be provided to an onboard device and/or to a user's smartphone (or a similar hand-held device), and/or directly to a fleet management system, and/or to a sensor's owner and/or to a tire shop/repairer able to intervene on the TMS/tire.

More specifically, a feedback can be provided to a user and/or a fleet management system and/or a sensor owner and/or a tire shop/repairer about current TMS condition (e.g., correctly attached), notifying them when a sensor issue is observed (e.g., detachment from the cupholder) and/or informing them when the TMS should be replaced.

As for the TMS detachment detection system according to the present disclosure (which is configured to carry out the TMS detachment detection method previously described), two main processing architectures can be conveniently used:

- in a first one, information items and/or features and/or measured quantities related to TMS detachment detection are sent to a remote cloud computing system configured to carry out the TMS detachment detection method according to the present disclosure; or
- in a second processing architecture, the TMS detachment detection method is carried out directly in the TMS that sends an alert/warning when an issue is detected.

In both cases, the alert/warning can be reported in the vehicle (and/or devices connected/installed to/on board the vehicle) and/or on a user/driver's smartphone and/or on a fleet management platform (that could be integrated into the same cloud computing system of the TMS detachment detection system, or that can be implemented in a different cloud computing system - e.g., an Original Equipment Manufacturer (OEM) cloud) and/or in a sensor owner's reporting system.

In view of the foregoing, technical advantages and innovative features of the present disclosure are immediately clear to those skilled in the art.

In this respect, it is worth noting that the present disclosure allows understanding TMS working conditions to estimate whether the TMS is in its proper position, held in the container, stuck to tire inner liner; if not, the driver/owner/fleet manager/sensor owner is notified recommending tire and sensor inspection within a certain mileage, to prevent impact on tire and/or sensor data and proceed with sensor and/or tire replacement in case of necessity, and also to prevent TMS data corruption and tire durability worsening from unexpected TMS sensor detachment from its proper fitting.

Compared to the method according to EP 3 480 602 A1, the method according to the present disclosure is simpler and more accurate and does not look at a specific acceleration trend but directly at the acceleration values.

Compared to the method according to EP 2 501 566 B1, the method according to the present disclosure is not constrained to specific vehicle dynamics but is applicable to all the vehicle dynamic phase space.

During experimental tests performed by the Applicant, a higher accuracy in TMS detachment detection was observed in case of high speeds, namely with vehicle speeds higher that 50 km/h. This phase space, that is explicitly excluded from the application of the method according to EP 2 501 566 B1, is really useful in case of Truck, Bus and Radial (TBR) tires because of long haul application where a truck con stay over 80 km/h for many hours (e.g., 4 hours at 90 Km/h corresponds to 360 km with a sensor problem not detected by the method according to EP 2 501 566 B1, but detected by the present disclosure).

Moreover, differently from the solution according to EP 2 501 566 B1, the present disclosure can also use additional information (e.g., contact length estimation) to assess the detachment status.

It is also worth noting that both the solutions according to EP 3 480 602 A1 and EP 2 501 566 B1 are limited to assessing whether a sensor is attached or detached, while the present disclosure is also able to check whether the sensor is still in the cupholder (and the cupholder is detached) or completely free.

In conclusion, it is clear that numerous modifications and variants can be made to the present disclosure, all falling within the scope of protection of the disclosure, as defined in the appended claims.

**Claims**

1. Method for detecting detachment of a sensor mounted on an inner face or layer of a tire of a vehicle, comprising:

   • acquiring data related to at least one information item provided by said sensor; and
   • detecting a detachment of the sensor based on the acquired data.

2. The method of claim 1, wherein detecting includes detecting whether:

   • the sensor is within its cupholder with the latter being detached from the inner face/layer of the tire, or
   • the sensor is outside the cupholder and completely free, or
   • the sensor is within the cupholder with the latter being properly attached to the inner face/layer of the tire.

3. The method of claim 1, wherein the acquired data are related to radial acceleration outside tire's footprint.

4. The method of claim 3, wherein detecting a detachment of the sensor includes comparing changes in radial acceleration sign with a predefined threshold.

5. The method of claim 3, wherein sensor detachment detection is performed on the basis of the acquired data by using one or more predefined machine learning and/or artificial intelligence technologies.

6. The method of claim 2, wherein the acquired data are related to tire footprint length defined as the ratio between footprint contact time and tire revolution time.

7. The method of claim 6, wherein detecting includes comparing standard deviation of the tire footprint length with predefined thresholds to detect whether:

   • the sensor is within its cupholder with the latter detached, or
   • the sensor is outside the cupholder and completely free, or
   • the sensor is within the cupholder with the latter properly attached.

8. The method of claim 6, wherein detection is performed on the basis of the acquired data by using one or more predefined machine learning and/or artificial intelligence technologies.

9. The method according to any claim 6-8, including using also acquired data related to radial acceleration outside tire's footprint and detecting sensor detachments also by comparing changes in radial acceleration sign with a predefined threshold.

10. The method of claim 2, wherein the acquired data are related to:

   • rolling lateral acceleration,
   • footprint size,
   • radial acceleration,
   • inflation pressure,
   • tire temperature,
   • tire speed.

11. The method of claim 10, further comprising acquiring additional data related to telematics information items and/or vehicle information items, wherein sensor detachment detection is performed/based also on said additional data.

12. The method according to claim 10 or 11, wherein sensor detachment detection is performed on the basis of the acquired data by using a support vector machine.

13. System for detecting detachment of a sensor mounted on an inner face or layer of a tire of a vehicle, configured to carry out the method as claimed in any preceding claim; the system comprising processing means configured to:

   • acquire/receive data related to at least one information item provided by the sensor; and
   • detect a detachment of the sensor based on the acquired/received data.

14. The system of claim 13, wherein the processing means are:

   • integrated into the sensor and configured to inform one or more predefined systems and/or users of the results of the detection performed, or
   • made as a cloud computing system that is configured to inform one or more predefined systems and/or users of the results of the detection performed.

FIG. 1

FIG. 2

8

FIG. 3

FIG. 4

FIG. 5

FIG. 6

FIG. 7

FIG. 8

FIG. 9

Europäisches
Patentamt

European
Patent Office

Office européen
des brevets

# EUROPEAN SEARCH REPORT

**Application Number**

**EP 24 19 5541**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 2021/268851 A1 (DHARAMSHI PARTHIV [DE] ET AL) 2 September 2021 (2021-09-02)<br>* paragraph [0077] - paragraph [0109]; figures 1-6 * | 1,3,4,6, 9-11,13<br>5,8,12, 14<br>2,7 | INV.<br>B60C23/04 |
| X | EP 3 480 602 A1 (BRIDGESTONE CORP [JP]) 8 May 2019 (2019-05-08)<br>* the whole document * | 1 | |
| X | DE 10 2015 009921 A1 (DAIMLER AG [DE]) 24 March 2016 (2016-03-24)<br>* paragraph [0022] - paragraph [0025]; figures 1,2 * | 1 | |
| Y | US 2024/159792 A1 (HASEGAWA HIROSHIGE [JP]) 16 May 2024 (2024-05-16)<br>* the whole document * | 5,8,12, 14 | |

TECHNICAL FIELDS
SEARCHED (IPC)

B60C

The present search report has been drawn up for all claims

| Place of search | Date of completion of the search | Examiner |
|---|---|---|
| Munich | 27 January 2025 | Billen, Karl |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 19 5541

This annex lists the patent family members relating to the patent documents cited in  the above-mentioned European search report.
The members are as contained in the European Patent Office EDP file on
The European Patent Office is in no way liable for these particulars which are merely given for the purpose of information.

27-01-2025

| Patent document cited in search report | | Publication date | Patent family member(s) | | Publication date |
|---|---|---|---|---|---|
| US 2021268851 | A1 | 02-09-2021 | CN | 112351898 A | 09-02-2021 |
| | | | DE 102018211211 A1 | | 09-01-2020 |
| | | | EP | 3817930 A1 | 12-05-2021 |
| | | | JP | 7044940 B2 | 30-03-2022 |
| | | | JP | 2021529699 A | 04-11-2021 |
| | | | US | 2021268851 A1 | 02-09-2021 |
| | | | WO | 2020007890 A1 | 09-01-2020 |
| EP 3480602 | A1 | 08-05-2019 | CN | 109477858 A | 15-03-2019 |
| | | | EP | 3480602 A1 | 08-05-2019 |
| | | | JP | 6567471 B2 | 28-08-2019 |
| | | | JP | 2018004416 A | 11-01-2018 |
| | | | US | 2019212360 A1 | 11-07-2019 |
| | | | WO | 2018003734 A1 | 04-01-2018 |
| DE 102015009921 A1 | | 24-03-2016 | NONE | | |
| US 2024159792 | A1 | 16-05-2024 | EP | 4368418 A1 | 15-05-2024 |
| | | | US | 2024159792 A1 | 16-05-2024 |

EPO FORM P0459

For more details about this annex : see Official Journal of the European Patent Office, No. 12/82

**REFERENCES CITED IN THE DESCRIPTION**

**Patent documents cited in the description**

- EP 3480602 A1

- EP 2501566 B1